# FASCICULE DE BREVET EUROPEEN

(11) **EP 3 509 826 B1**
(45) Date de publication et mention de la délivrance du brevet: **14.07.2021**
(21) Numéro de dépôt: 17780785.6
(22) Date de dépôt: 04.09.2017
(51) Int. Cl.: B29C 70/32, B29C 53/56, B29C 53/80, B29C 53/04, B29B 11/16, B29L 31/00

(54) **INSTALLATION ET PROCÉDÉ POUR LA FORMATION D'UNE PRÉFORME FIBREUSE DE RÉVOLUTION PRÉSENTANT EN SECTION RADIALE UN PROFIL ÉVOLUTIF**
ANLAGE UND VERFAHREN ZUR HERSTELLUNG EINER ROTIERENDEN FASERIGEN VORFORM MIT EINEM SICH ENTWICKELNDEN PROFIL IM RADIALEN ABSCHNITT
INSTALLATION AND METHOD FOR FORMING A REVOLVING FIBROUS PREFORM EXHIBITING, IN RADIAL SECTION, A PROFILE THAT EVOLVES

(30) Priorité: 07.09.2016 FR 1658307
(43) Date de publication de la demande: 17.07.2019
(73) Titulaire: Safran Aircraft Engines, 75015 Paris (FR)
(72) Inventeur: FABRE, Hubert Jean Marie, 77550 Moissy-Crayamel (FR); HELLOT, Jérémy, 77550 Moissy-Crayamel (FR)
(74) Mandataire: Cabinet Beau de Loménie
(86) Numéro de dépôt international: PCT/FR2017/052333
(87) Numéro de publication internationale: WO 2018/046826

(56) Documents cités:
- EP-A1- 1 938 955
- EP-A1- 2 979 852
- DE-A1-102008 028 441

## Description

### Arrière-plan de l'invention

La présente invention concerne la mise en forme de préformes fibreuses par enroulement d'une texture fibreuse obtenue par tissage tridimensionnel (3D) ou multicouche de structures fibreuses de renfort de pièces en matériau composite.

L'invention concerne plus particulièrement les préformes fibreuses destinées à former des renforts de pièces en matériau composite de révolution présentant en section radiale un profil évolutif (variation de forme et ou d'épaisseur) tel que par exemple un carter de soufflante de moteur aéronautique. La préforme fibreuse d'une telle pièce est réalisée par tissage d'une texture fibreuse et enroulement sous tension de cette texture sur un moule de révolution comportant une surface d'enroulement ayant en section radiale un profil en relief correspondant au profil de la pièce à fabriquer.

Afin de réaliser une texture fibreuse adaptée à la forme évolutive du moule d'injection, on utilise un tissage en forme, encore appelé « contour weaving » ou « outline weaving », qui consiste à appeler une longueur différente de fils de chaîne en fonction de leur position sur la largeur de la texture fibreuse tissée sous forme de bande de manière à obtenir des rapports entre les longueurs de fils de chaîne (direction tangentielle) similaires aux rapports entre les rayons définissant le profil évolutif de la pièce finale à fabriquer.

La texture fibreuse ainsi tissée est stockée sur un mandrin de stockage pour être ultérieurement enroulée sous tension sur un moule d'injection de révolution comportant une surface d'enroulement ayant en section radiale un profil en relief correspondant au profil de la pièce à fabriquer. La mise sous tension de la texture lors de son enroulement sur le moule est réalisée par le mandrin de stockage encore appelé mandrin « take-up », un ou plusieurs rouleaux suiveurs étant placés entre le mandrin de stockage et le moule d'injection.

Le ou les rouleaux suiveurs présentent sur leur largeur axiale un rayon variable définissant une surface externe à profil en relief qui permet de conserver les rapports de longueurs de fils définis lors du tissage entre le mandrin de stockage et le moule d'injection. Par conséquent, le ou les rouleaux suiveurs présentent sur leur surface destinée à entrer en contact avec la texture fibreuse une ou plusieurs pentes formant un angle avec l'axe du rouleau. Lors du passage sous tension de la texture fibreuse sur une portion en pente d'un rouleau suiveur, celle-ci peut former des plis notamment en raison de la présence de déviations dans le tissage, de la déformation de la texture sous tensions et/ou du glissement de la texture sur la pente. Ces plis peuvent se propager dans la texture jusque sur le moule. Lors de l'apparition d'un pli, en particulier au niveau du moule, il faut dérouler la partie de la texture concernée, puis la tirer manuellement pour la remettre à plat et enfin reprendre l'enroulement. La mise en forme par enroulement de la texture devient dans ce cas fastidieuse et nécessite la présence et l'intervention d'un opérateur spécialisé. La reprise des plis en cours d'enroulement entraîne également une interruption de la mise sous tension de la texture afin de permettre sa manipulation, ce qui n'est pas souhaitable vis-à-vis des spécifications de fabrication. Le document DE102008028441 divulgue le préambule des revendications 1 et 3.

### Objet et résumé de l'invention

Il est donc souhaitable de pouvoir réaliser des préformes fibreuses 3D ou multicouches en réduisant de manière significative le risque d'apparition de plis dans la texture fibreuse lors de sa mise en forme par enroulement.

A cet effet, l'invention concerne une installation pour la mise en forme d'une préforme fibreuse de révolution présentant en section radiale un profil évolutif, conformément à la revendication 1.

Ainsi, lorsque le contre-rouleau est maintenu à une distance prédéterminée du rouleau suiveur correspondant à l'épaisseur de la texture fibreuse, celui-ci fait physiquement obstacle à la formation de plis dans la texture fibreuse lors de son passage sur le rouleau suiveur. En effet, dans ce cas, le contre-rouleau ne laisse aucun espace disponible pour le développement de plis dans la texture fibreuse.

De même, lorsque le contre-rouleau est maintenu à une distance prédéterminée du rouleau suiveur inférieure à l'épaisseur de la texture fibreuse ou lorsque le contre-rouleau applique une pression de contact sur le rouleau suiveur, le contre-rouleau applique une pression de contact sur la texture fibreuse interposée entre le rouleau suiveur et le contre-rouleau empêchant ainsi la formation de plis dans la texture lors de son passage sur le rouleau suiveur. On augmente ainsi le frottement entre la texture et le rouleau suiveur, ce qui permet d'éviter la formation de plis dans la texture notamment par glissement sur la ou les pentes du rouleau suiveur.

Selon une première caractéristique particulière de l'installation de l'invention, chaque contre-rouleau comporte une surface rugueuse. Cela permet d'augmenter encore les frottements avec la texture lors de son passage sur le rouleau suiveur.

Conformément à l'invention, au moins un contre-rouleau présente sur sa surface au moins un relief correspondant à une variation de section du contre-rouleau. Il est ainsi possible d'adapter le contre-rouleau à la ou les variations d'épaisseur éventuellement présentes dans la texture fibreuse.

Selon un mode de réalisation qui n'est pas couvert par l'invention, au moins un contre-rouleau comprend au moins deux rouleaux, l'installation comprenant des moyens de maintien des rouleaux configurés pour maintenir lesdits rouleaux à une distance prédéterminée respectivement de la première pente et de la portion adjacente à ladite première pente, ou des moyens de maintien desdits rouleaux configurés pour appliquer une pression de contact des rouleaux respectivement sur la première pente et sur la portion adjacente à ladite première pente.

Dans ce cas, le contre-rouleau peut comprendre au moins trois rouleaux dont deux d'entre eux sont maintenus en parallèle et décalée l'un par rapport à l'autre suivant une direction perpendiculaire à la direction des axes des rouleaux. Il est ainsi possible d'adapter le contre-rouleau à la ou les variations d'épaisseur éventuellement présentes dans la texture fibreuse.

L'invention a également pour objet un procédé de mise en forme d'une préforme fibreuse de révolution présentant en section radiale un profil évolutif à partir d'une texture fibreuse obtenue par tissage tridimensionnel ou multicouche entre une pluralité de couches de fils de chaîne liées entre elles par des fils de trame, conformément à la revendication 3.

Selon une première caractéristique particulière du procédé de l'invention, chaque contre-rouleau comporte une surface rugueuse.

Conformément à l'invention, la texture fibreuse présente au moins une variation d'épaisseur dans le sens de sa largeur et au moins un contre-rouleau présente sur sa surface au moins un relief destiné à coopérer avec ladite au moins variation d'épaisseur.

Selon un mode de réalisation particulier du procédé qui n'est pas couvert par les revendications, au moins un contre-rouleau comprend au moins deux rouleaux, les rouleaux étant maintenus à une distance prédéterminée respectivement de la première pente et de la portion adjacente à ladite première pente, la distance prédéterminée étant inférieure ou égale à l'épaisseur de la texture fibreuse, ou lesdits rouleaux appliquant une 10 pression sur la texture fibreuse au niveau respectivement de la première pente et de la portion adjacente à ladite première pente.

Selon un autre mode de réalisation qui n'est pas couvert par les revendications, la texture fibreuse présente au moins une variation d'épaisseur dans le sens de sa largeur et le contre-rouleau comprend au moins trois rouleaux dont deux d'entre eux sont maintenus en parallèle et décalée l'un par rapport à l'autre suivant une direction perpendiculaire à la direction des axes de rouleaux de manière à coopérer avec ladite au moins une variation d'épaisseur.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'une installation pour la mise en forme d'une texture fibreuse à forme évolutive conformément à un mode de réalisation de l'invention,
- la figure 2 est une vue schématique en perspective montrant l'enroulement d'une texture fibreuse sur un moule d'injection de l'installation de la figure 1,
- les figures 3A et 3B sont des vues schématiques respectivement en perspective et en coupe d'un rouleau suiveur et d'un contre-rouleau associé de l'installation de la figure 2,
- la figure 4 est une vue schématique en coupe d'un rouleau suiveur de l'installation de la figure 2 associé avec un contre-rouleau comprenant plusieurs rouleaux,
- la figure 5 est une vue schématique en coupe d'un rouleau suiveur de l'installation de la figure 2 associé avec un contre-rouleau présentant un relief sur sa surface, conformément à l'invention,
- la figure 6 est une vue schématique en coupe d'un rouleau suiveur de l'installation de la figure 2 associé avec un contre-rouleau comprenant plusieurs rouleaux dont deux sont maintenus en parallèle et décalés l'un par rapport à l'autre.

### Description détaillée de modes de réalisation

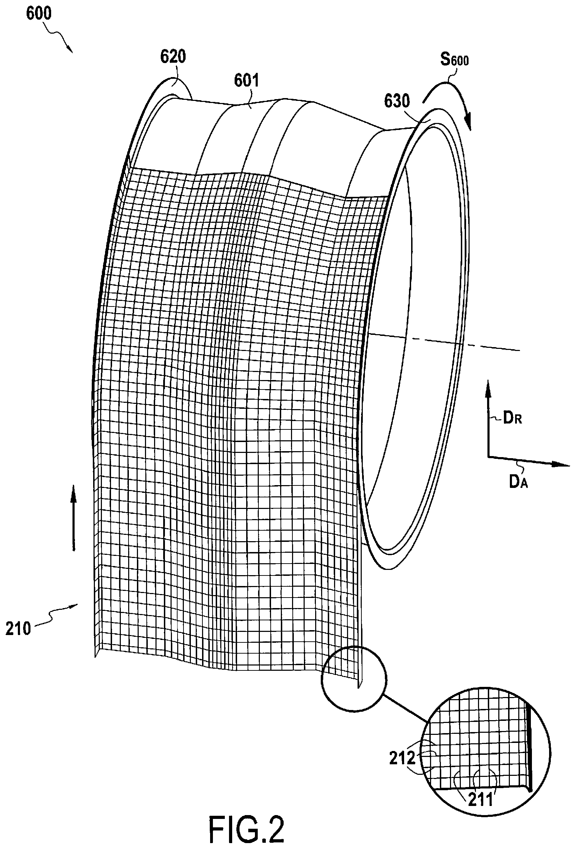

L'invention s'applique d'une manière générale à la réalisation de préformes fibreuses de révolution présentant en coupe radiale un profil évolutif et qui sont aptes à constituer des renforts fibreux, ou préformes, pour la fabrication de pièces en matériau composite de forme de révolution présentant également un profil évolutif et/ou une épaisseur variable notamment en section radiale, la section radiale correspondant à un plan défini par la direction axiale et la direction radiale du moule sur lequel la préforme est mise en forme, telles que la direction axiale DA et la direction radiale DR indiquée sur la figure 2. Les pièces sont obtenues par enroulement d'une texture fibreuse sur un moule et injection d'un précurseur de matrice dans la préforme fibreuse ainsi constituée, la matrice étant typiquement une résine.

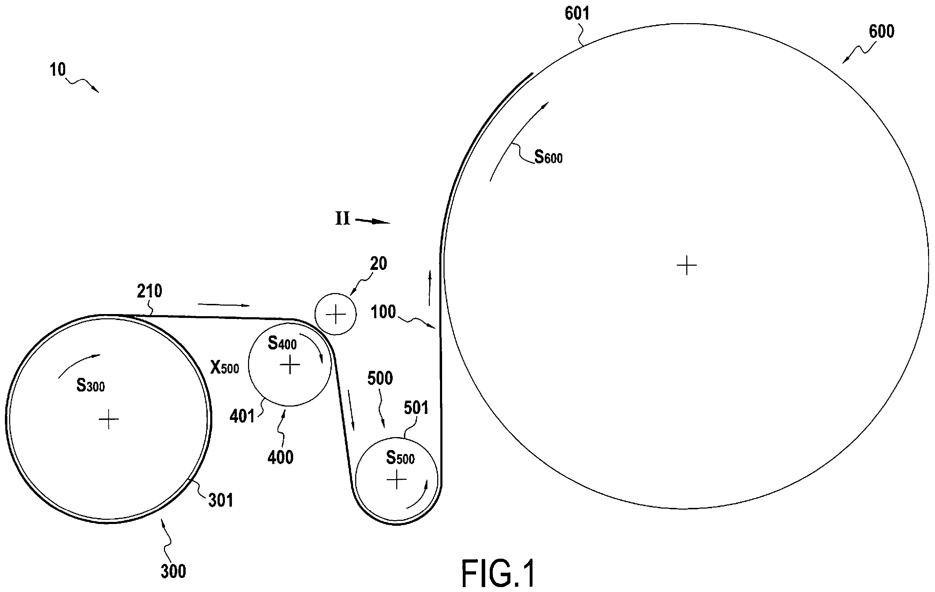

La figure 1 représente une installation 10 pour la mise en forme d'une préforme fibreuse à forme évolutive conformément à un mode de réalisation de l'invention. L'installation 10 comprend un mandrin de stockage 300, deux rouleaux suiveurs 400 et 500 placés en aval du mandrin 300 selon le sens d'enroulement de la texture fibreuse et un moule 600 disposé en aval du rouleau suiveur 500. Une texture fibreuse 210 présente sur le mandrin de stockage 300 est déroulée à partir de celui-ci pour être mise en forme par enroulement sur le moule 600, l'enroulement se faisant sous une tension contrôlée au niveau du mandrin de stockage.

La structure fibreuse 210 est obtenue par tissage tridimensionnel ou par tissage multicouche réalisé de façon connue au moyen d'un métier à tisser de type jacquard sur lequel on a disposé un faisceau de fils de chaînes ou torons en une pluralité de couches, les fils de chaînes étant liés par des fils de trame.

Par "tissage tridimensionnel" ou "tissage 3D", on entend ici un mode de tissage par lequel certains au moins des fils de trame lient des fils de chaîne sur plusieurs couches de chaîne ou inversement. Le tissage 3D peut être de type interlock comme décrit dans le document WO 2006/136755.

Par "tissage multicouche", on désigne ici un tissage 3D avec plusieurs couches de chaîne dont l'armure de base de chaque couche est équivalente à une armure de tissu 2D classique, tel qu'une armure de type toile, satin ou sergé, mais avec certains points de l'armure qui lient les couches de chaîne entre elles ou inversement.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

La structure fibreuse peut être notamment tissée à partir de fils de fibres de carbone, de céramique telle que du carbure de silicium, de verre, ou encore d'aramide.

Afin de réaliser une texture fibreuse adaptée à la forme évolutive de la préforme fibreuse à former sur le moule d'injection, on utilise un tissage en forme, encore appelé « contour weaving », qui consiste à appeler une longueur différente de fils de chaîne en fonction de leur position sur la largeur de la texture fibreuse tissée sous forme de bande. A cet effet, on utilise un ou plusieurs rouleaux d'appel en sortie du métier à tisser qui présentent sur leur largeur axiale un rayon variable définissant une surface externe à profil en relief permettant d'appeler des longueurs de fils de chaîne différentes en fonction de leur position sur la largeur de la texture fibreuse, une plus grande longueur de fil de chaîne étant appelée par la ou les parties d'un rouleau d'appel ayant un rayon plus important que le reste du rouleau. Les appels différentiels réalisés par les rouleaux d'appel se répercutent jusque dans la cellule de tissage du métier à tisser en tirant la bonne longueur de fils de chaîne avant l'insertion de la colonne de fils de trame suivante. La texture ainsi tissée est enroulée sur un mandrin ou tambour de stockage, encore appelé mandrin « take-up », situé en aval des rouleaux d'appel. La texture fibreuse est ainsi stockée en vue de sa mise en forme ultérieure sur un moule.

Comme illustrée sur la figure 2, la préforme fibreuse est mise en forme par enroulement sur un moule d'injection 600 de la texture fibreuse 210 réalisée par tissage tridimensionnel entre une pluralité de fils de chaîne 211 et une pluralité de fils de trame 212, la texture fibreuse formant une bande présentant en section transversale un profil évolutif, c'est-à-dire une variation de forme et/ou d'épaisseur en coupe transversale. Le moule présente en section radiale un profil correspondant à celui de la pièce à réaliser qui correspond dans l'exemple décrit ici à un carter de soufflante de moteur aéronautique.

A cet effet, le moule 600 présente une surface externe 601 dont le profil en relief correspond à la surface interne du carter à réaliser. Par son enroulement sur le mandrin 200, la texture fibreuse 210 épouse le profil de celui-ci. Le moule 600 comporte également deux flasques 620 et 630 pour former des parties de préforme fibreuse correspondant aux brides du carter à fabriquer. Le moule 600 est entraîné en rotation suivant le sens de rotation S₆₀₀, par exemple par un moteur électrique (non représenté sur la figure 2), tandis que la texture fibreuse 210 est mise sous tension entre le mandrin de stockage 300 et le moule 600 par les rouleaux suiveurs 400 et 500.

Les premier et deuxième rouleaux suiveurs 400 et 500 placés en aval du mandrin de stockage 300 sont entraînés suivant respectivement des sens de rotation S₄₀₀ et S₅₀₀ indiqués sur la figure 1. Ils présentent sur leur largeur axiale un rayon variable de manière à définir respectivement des surfaces externes 401 et 501 ayant un profil en relief correspondant au profil visé pour la préforme fibreuse à réaliser, ces profils présentant une ou plusieurs pentes sur lesquelles la texture fibreuse est destinée à circuler.

L'installation 10 comprend en outre un mandrin ou tambour de stockage 300, encore appelé mandrin « take-up », qui est entraîné principalement en rotation suivant le sens de rotation S₃₀₀.

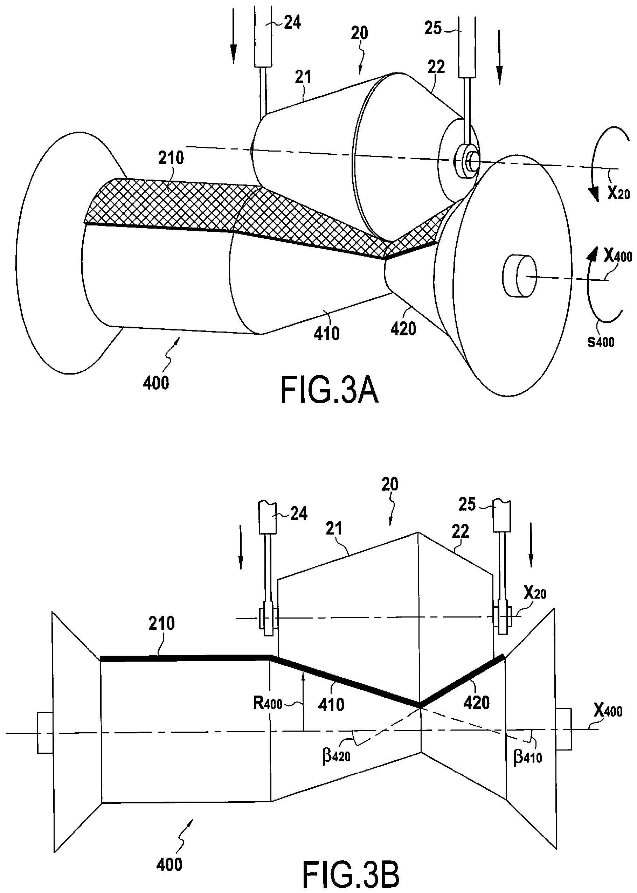

Conformément à l'invention, au moins un contre-rouleau est utilisé en association avec un rouleau suiveur. Dans l'exemple décrit ici et tel qu'illustré sur les figures 3A et 3B, l'installation 10 comprend en outre un contre-rouleau 20 qui est utilisé avec le rouleau suiveur 400. Le rouleau suiveur 400 s'étend axialement suivant un axe X₄₀₀ et dont le rayon R₄₀₀ varie le long de l'axe X₄₀₀ (figure 3B) de sorte que le rouleau suiveur 400 présente des première et deuxième pentes adjacentes 410 et 420 formant chacune respectivement un angle β₄₁₀ et un angle β₄₂₀ avec l'axe X₄₀₀ du rouleau suiveur 400. Le contre-rouleau 20 présente une forme complémentaire des première et deuxième pentes 410 et 420 du rouleau suiveur 400. Dans la présente invention, on entend, par « forme complémentaire » du contre-rouleau, une forme qui suit essentiellement les pentes ou portions du rouleau suiveur en vis-à-vis desquelles le contre-rouleau est destiné à être placé, la surface du contre-rouleau pouvant présenter un ou plusieurs reliefs permettant de s'adapter aux variations d'épaisseur de la texture fibreuse comme expliqué ci-après en détails. Dans l'exemple décrit ici, le contre-rouleau 20 présente une première pente 21 complémentaire de la première pente 410 du rouleau suiveur 400 et une deuxième pente 22 complémentaire de la deuxième pente 420 du rouleau suiveur 400.

L'installation 10 comprend des moyens de maintien du contre-rouleau 20 configurés pour maintenir celui-ci en alignement des première et deuxième pentes 410 et 420 du rouleau suiveur 400. Les moyens de maintien, ici constitués par deux vérins 24 et 25 reliés à l'axe X₂₀ du contre-rouleau 20, sont configurés pour maintenir le contre-rouleau 20 à une distance prédéterminée des première et deuxième pentes 410 et 420 ou pour appliquer une pression de contact du contre-rouleau 20 sur les première et deuxième pentes 410 et 420. Lorsque le contre-rouleau 20 est maintenu à une distance prédéterminée des pentes 410 et 420 du rouleau suiveur 400, cette distance est inférieure ou égale à l'épaisseur de la texture fibreuse 210.

Ainsi, lorsque le contre-rouleau est maintenu à une distance prédéterminée du rouleau suiveur correspondant à l'épaisseur de la texture fibreuse, celui-ci fait physiquement obstacle à la formation de plis dans la texture fibreuse lors de son passage sur le rouleau suiveur. En effet, dans ce cas, le contre-rouleau ne laisse aucun espace disponible pour le développement de plis dans la texture fibreuse.

De même, lorsque le contre-rouleau est maintenu à une distance prédéterminée du rouleau suiveur inférieure à l'épaisseur de la texture fibreuse ou lorsque le contre-rouleau applique une pression de contact sur le rouleau suiveur, le contre-rouleau applique une pression de contact sur la texture fibreuse interposée entre le rouleau suiveur et le contre-rouleau empêchant ainsi la formation de plis dans la texture lors de son passage sur le rouleau suiveur. On augmente ainsi le frottement entre la texture et le rouleau suiveur, ce qui permet d'éviter la formation de plis dans la texture notamment par glissement sur la ou les pentes du rouleau suiveur. Le frottement peut être également augmenté en dotant le contre-rouleau d'une surface rugueuse.

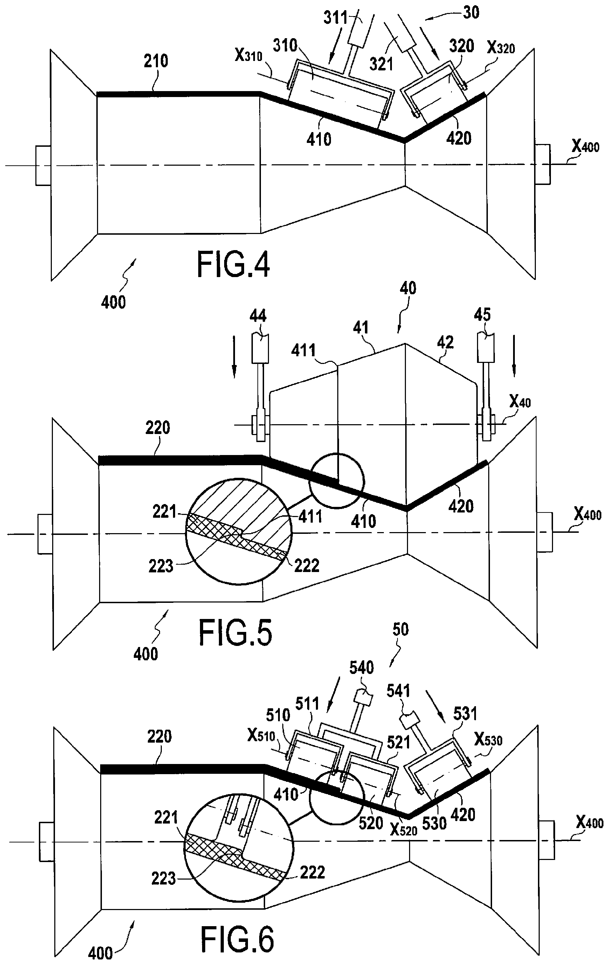

La figure 4 illustre un autre mode de réalisation d'un contre-rouleau qui diffère du contre-rouleau 20 décrit précédemment en ce qu'il est constitué de plusieurs rouleaux. Plus précisément, sur la figure 4, un contre-rouleau 30 est constitué d'un premier rouleau 310 et d'un deuxième rouleau 320. Dans ce mode de réalisation, l'installation pour la mise en forme d'une préforme fibreuse comprend des moyens de maintien spécifiques pour le premier et le deuxième rouleau 310 et 320 du contre-rouleau 30 qui sont configurés pour maintenir les premier et deuxième rouleaux 310 et 320 en alignement respectivement des première et deuxième pentes 410 et 420 du rouleau suiveur 400. Les moyens de maintien, ici constitués par un premier vérin 311 relié à l'axe X₃₁₀ du premier rouleau 310 et un deuxième vérin 321 relié à l'axe X₃₂₀ du deuxième rouleau 320, sont configurés pour maintenir les rouleaux 310 et 320 à une distance prédéterminée des première et deuxième pentes 410 et 420 ou pour appliquer une pression de contact du contre-rouleau 30 sur les première et deuxième pentes 410 et 420. Lorsque les rouleaux 310 et 320 du contre-rouleau 30 sont maintenus à une distance prédéterminée des pentes 410 et 420 du rouleau suiveur 400, cette distance est inférieure ou égale à l'épaisseur de la texture fibreuse 210.

Ainsi, lorsque les rouleaux 310 et 320 du contre-rouleau 30 sont maintenus à une distance prédéterminée du rouleau suiveur correspondant à l'épaisseur de la texture fibreuse, ceux-ci font physiquement obstacle à la formation de plis dans la texture fibreuse lors de son passage sur le rouleau suiveur car ils ne laissent plus d'espace disponible pour le développement de plis dans la texture fibreuse. De même, lorsque les rouleaux du contre-rouleau sont maintenus à une distance prédéterminée du rouleau suiveur inférieure à l'épaisseur de la texture fibreuse ou lorsque les rouleaux du contre-rouleau appliquent une pression de contact sur le rouleau suiveur, les rouleaux du contre-rouleau appliquent une pression de contact sur la texture fibreuse empêchant ainsi la formation de plis dans la texture lors de son passage sur le rouleau suiveur. On augmente ainsi le frottement entre la texture et le rouleau suiveur, ce qui permet d'éviter la formation de plis dans la texture notamment par glissement sur la ou les pentes du rouleau suiveur. Le frottement peut être également augmenté en dotant les rouleaux du contre-rouleau d'une surface rugueuse.

La figure 5 illustre un mode de réalisation d'un contre-rouleau selon l'invention qui diffère du contre-rouleau 20 décrit précédemment en ce que sa surface est adaptée pour suivre une variation d'épaisseur dans la texture fibreuse. Plus précisément, sur la figure 5, le contre-rouleau 40 présente une première pente 41 complémentaire de la première pente 410 du rouleau suiveur 400 et une deuxième pente 42 complémentaire de la deuxième pente 420 du rouleau suiveur 400. Dans l'exemple décrit ici, l'installation pour la mise en forme d'une préforme fibreuse est utilisée avec une texture fibreuse 220 qui présente une portion de surépaisseur 221 entraînant une variation d'épaisseur 223 dans le profil de la texture (i.e. dans sa largeur) par rapport à l'autre portion 222 de la texture. Dans ce cas, afin de s'adapter à la ou les variations d'épaisseur présentes dans la texture fibreuse, le contre-rouleau comporte sur sa surface un ou plusieurs reliefs destinés à coopérer avec la ou les variations d'épaisseur de la texture.

Dans l'exemple décrit ici, la variation d'épaisseur 223 étant présente dans la texture fibreuse au niveau de la première pente 41 du contre-rouleau 40, la pente 41 présente un relief ou épaulement 411 afin de réduire la section du contre-rouleau 40 au niveau de la variation d'épaisseur 223 et de s'adapter ainsi à l'épaisseur variable de la texture fibreuse.

L'installation comprend des moyens de maintien du contre-rouleau 40 configurés pour maintenir celui-ci en alignement des première et deuxième pentes 410 et 420 du rouleau suiveur 400. Les moyens de maintien, ici constitués par deux vérins 44 et 45 reliés à l'axe X₄₀ du contre-rouleau 40, sont configurés pour maintenir le contre-rouleau 40 à une distance prédéterminée des première et deuxième pentes 410 et 420 ou pour appliquer une pression de contact du contre-rouleau 40 sur les première et deuxième pentes 410 et 420. Lorsque le contre-rouleau 40 est maintenu à une distance prédéterminée des pentes 410 et 420 du rouleau suiveur 400, cette distance est inférieure ou égale à l'épaisseur de la texture fibreuse 220.

Ainsi, lorsque le contre-rouleau est maintenu à une distance prédéterminée du rouleau suiveur correspondant à l'épaisseur de la texture fibreuse, celui-ci fait physiquement obstacle à la formation de plis dans la texture fibreuse lors de son passage sur le rouleau suiveur. En effet, dans ce cas, le contre-rouleau ne laisse aucun espace disponible pour le développement de plis dans la texture fibreuse.

De même, lorsque le contre-rouleau est maintenu à une distance prédéterminée du rouleau suiveur inférieure à l'épaisseur de la texture fibreuse ou lorsque le contre-rouleau applique une pression de contact sur le rouleau suiveur, le contre-rouleau applique une pression de contact sur la texture fibreuse interposée entre le rouleau suiveur et le contre-rouleau empêchant ainsi la formation de plis dans la texture lors de son passage sur le rouleau suiveur. On augmente ainsi le frottement entre la texture et le rouleau suiveur, ce qui permet d'éviter la formation de plis dans la texture notamment par glissement sur la ou les pentes du rouleau suiveur. Le frottement peut être également augmenté en dotant le contre-rouleau d'une surface rugueuse.

La figure 6 illustre un autre mode de réalisation d'un contre-rouleau qui diffère du contre-rouleau 20 décrit précédemment en ce que le contre-rouleau comprend plusieurs rouleaux adaptés pour suivre une variation d'épaisseur dans la texture fibreuse. Dans l'exemple décrit ici, l'installation pour la mise en forme d'une préforme fibreuse est utilisée avec une texture fibreuse 220 qui présente une portion de surépaisseur 221 entraînant une variation d'épaisseur 223 dans le profil de la texture par rapport à l'autre portion 222 de la texture. Sur la figure 6, un contre-rouleau 50 est constitué, d'une part, d'un premier et d'un deuxième rouleaux 510 et 520 et, d'autre part, d'un troisième rouleau 530. La variation d'épaisseur 223 étant présente dans la texture fibreuse au niveau des premier et deuxième rouleaux 510 et 520 du contre-rouleau 50, les rouleaux 510 et 520 sont maintenus dans une position décalée l'un par rapport à l'autre afin de s'adapter ainsi à l'épaisseur variable de la texture fibreuse, le rouleau 510 étant maintenu en regard de la portion de surépaisseur 221 tandis que le rouleau 520 est maintenu en regard de l'autre portion 222 de la texture fibreuse 220. En d'autres termes, le premier rouleau 510 étant placé en regard de la portion de surépaisseur 221 de la texture fibreuse 220, il est maintenu à une distance plus éloignée de la pente 410 que le deuxième rouleau 520 qui est placé en regard de la portion 222 qui présente une épaisseur inférieure à celle de la portion 221 dans la texture fibreuse.

Dans ce mode de réalisation, l'installation pour la mise en forme d'une préforme fibreuse comprend des moyens de maintien spécifiques pour les premier, deuxième et troisième rouleaux 510, 520 et 530 du contre-rouleau 50 qui sont configurés pour maintenir les rouleaux 510 et 520 en alignement de la première pente 410 et le rouleau 530 en alignement de la deuxième pente 420 du rouleau suiveur 400. Les moyens de maintien sont ici constitués par un premier vérin 540 relié à la fois à un premier support 511 relié à l'axe Xsio du premier rouleau 510 et à un deuxième support 521 relié à l'axe X₅₂₀ du deuxième rouleau et par un deuxième vérin 541 relié à l'axe X₅₃₀ du troisième rouleau 530. Les premier et deuxième rouleaux 510 et 520 sont reliés au vérin 540 dans une position décalée l'un par rapport à l'autre comme indiqué ci-avant.

Les moyens de maintien, ici les vérins 540 et 541 sont configurés pour maintenir les rouleaux 510, 520 et 530 à une distance prédéterminée des première et deuxième pentes 410 et 420 ou pour appliquer une pression de contact des rouleaux 510, 520 et 530 sur les première et deuxième pentes 410 et 420. Lorsque les rouleaux 510, 520 et 530 du contre-rouleau 50 sont maintenus à une distance prédéterminée des pentes 410 et 420 du rouleau suiveur 400, cette distance est inférieure ou égale à l'épaisseur de la texture fibreuse 210.

Ainsi, lorsque les rouleaux 510, 520 et 530 du contre-rouleau 50 sont maintenus à une distance prédéterminée du rouleau suiveur correspondant à l'épaisseur de la texture fibreuse, ceux-ci font physiquement obstacle à la formation de plis dans la texture fibreuse lors de son passage sur le rouleau suiveur car ils ne laissent plus d'espace disponible pour le développement de plis dans la texture fibreuse. De même, lorsque les rouleaux du contre-rouleau sont maintenus à une distance prédéterminée du rouleau suiveur inférieure à l'épaisseur de la texture fibreuse ou lorsque les rouleaux du contre-rouleau appliquent une pression de contact sur le rouleau suiveur, les rouleaux du contre-rouleau appliquent une pression de contact sur la texture fibreuse empêchant ainsi la formation de plis dans la texture lors de son passage sur le rouleau suiveur. On augmente ainsi le frottement entre la texture et le rouleau suiveur, ce qui permet d'éviter la formation de plis dans la texture notamment par glissement sur la ou les pentes du rouleau suiveur. Le frottement peut être également augmenté en dotant les rouleaux du contre-rouleau d'une surface rugueuse.

## Revendications

1. Installation (10) pour la mise en forme d'une préforme fibreuse de révolution présentant en section radiale un profil évolutif, comprenant un mandrin de stockage (300) destiné à stocker une texture fibreuse (210) en forme de bande enroulée, un ou plusieurs rouleaux suiveurs (400, 500) et un moule de révolution (600) sur lequel la texture fibreuse est destinée à être mise en forme par enroulement, au moins un rouleau suiveur présentant en section selon un plan défini par une direction axiale et une direction radiale un profil comportant au moins une première pente (410) formant un angle (β₄₁₀) avec l'axe (X₄₀₀) du rouleau suiveur et une portion adjacente à la première pente, ladite portion étant parallèle à l'axe (X₄₀₀) du rouleau suiveur (400) ou correspondant à une deuxième pente (420) formant un deuxième angle (β₄₂₀) avec l'axe du rouleau suiveur différent du premier angle,
l'installation comprenant en outre au moins un contre-rouleau (20) présentant une forme complémentaire de la première pente et de la portion adjacente à ladite première pente, l'installation comprenant des moyens de maintien (24, 25) de chaque contre-rouleau configurés pour maintenir ledit contre-rouleau à une distance prédéterminée de la première pente (410) et de la portion adjacente à ladite première pente ou configurés pour appliquer une pression de contact du contre-rouleau (20) sur la première pente (410) et la portion adjacente à ladite première pente,
**caractérisé en ce qu'**au moins un contre-rouleau (40) présente sur sa surface au moins un relief (411) correspondant à une variation de section du contre-rouleau adapté pour suivre au moins une variation d'épaisseur de la texture fibreuse.

2. Installation selon la revendication 1, dans laquelle chaque contre-rouleau (20) comporte une surface rugueuse.

3. Procédé de mise en forme d'une préforme fibreuse de révolution présentant en section radiale un profil évolutif à partir d'une structure fibreuse (210) obtenue par tissage tridimensionnel ou multicouche entre une pluralité de couches de fils de chaîne (211) liées entre elles par des fils de trame (212), la texture fibreuse (210) étant mise en forme par enroulement sous tension sur un moule de révolution (600), la texture fibreuse étant déroulée à partir d'un mandrin de stockage (300), la texture fibreuse circulant sur un ou plusieurs rouleaux suiveurs (400, 500) placés entre le mandrin de stockage (300) et le moule de révolution (600), au moins un rouleau suiveur (400) présentant en section selon un plan défini par une direction axiale et une direction radiale un profil comportant au moins une première pente (410) formant un angle (β₄₁₀) avec l'axe (X₄₀₀) du rouleau suiveur et une portion adjacente à la première pente, ladite portion étant parallèle à l'axe (X₄₀₀) du rouleau suiveur (400) ou correspondant à une deuxième pente (420) formant un deuxième angle (β₄₂₀) avec l'axe du rouleau suiveur différent du premier angle,
le procédé comprenant en outre l'utilisation d'au moins un contre-rouleau (20) présentant une forme complémentaire de la première pente (410) et de la portion adjacente à ladite première pente, chaque contre-rouleau étant maintenu à une distance prédéterminée de la première pente (410) et de la portion adjacente à ladite première pente, la distance prédéterminée étant inférieure ou égale à l'épaisseur de la texture fibreuse (210), ou chaque contre-rouleau appliquant une pression de contact sur la texture fibreuse (210) au niveau de la première pente (410) et de la portion adjacente à ladite première pente,
**caractérisé en ce que** la texture fibreuse (220) présente au moins une variation d'épaisseur (223) dans le sens de sa largeur et **en ce que** le contre-rouleau (40) présente sur sa surface au moins un relief (411) destiné à coopérer avec ladite au moins une variation d'épaisseur.

4. Procédé selon la revendication 3, dans lequel chaque contre-rouleau (20) comporte une surface rugueuse.

## Patentansprüche

1. Anlage (10) zum Formen einer rotierenden faserigen Vorform mit einem sich entwickelnden Profil im radialen Schnitt, umfassend einen Lagerkern (300), der zum Lagern einer faserigen Textur (210) in Form eines gewickelten Bandes umfasst, eine oder mehrere Nachlaufrollen (400, 500) und eine Rotationsform (600), auf der die faserige Textur bestimmt ist, durch Wickeln geformt zu werden, wobei mindestens eine Nachlaufrolle im Schnitt gemäß einer Ebene, die durch eine axiale Richtung und eine radiale Richtung definiert ist, ein Profil aufweist, das mindestens eine erste Schräge (410) aufweist, die einen Winkel (β₄₁₀) mit der Achse (X₄₀₀) der Nachlaufrolle bildet, und einen zur der ersten Schräge benachbarten Abschnitt, wobei der Abschnitt parallel zur Achse (X₄₀₀) der Nachlaufrolle (400) ist oder einer zweiten Schräge (420) entspricht, die einen zweiten Winkel (β₄₂₀) mit der Achse der Nachlaufrolle bildet, der sich vom ersten Winkel unterscheidet,
wobei die Anlage ferner mindestens eine Gegenrolle (20) umfasst, die eine zu der ersten Schräge und dem zu der ersten Schräge benachbarten Abschnitt komplementäre Form hat, wobei die Anlage Haltemittel (24, 25) jeder Gegenrolle umfasst, die ausgelegt sind, um die Gegenrolle in einem von der ersten Schräge (410) und dem zu der ersten Schräge benachbarten Abschnitt vorher festgelegten Abstand zu halten, oder ausgelegt sind, um einen Kontaktdruck der Gegenrolle (20) auf die erste Schräge (410) und den zu der ersten Schräge benachbarten Abschnitt auszuüben,
**dadurch gekennzeichnet, dass** mindestens eine Gegenrolle (40) auf ihrer Oberfläche mindestens ein Relief (411) aufweist, das einer Schnittvariation der Gegenrolle entspricht, das geeignet ist, mindestens einer Dickenvariation der faserigen Textur zu folgen.

2. Anlage nach Anspruch 1, wobei jede Gegenrolle (20) eine raue Oberfläche aufweist.

3. Verfahren zum Formen einer rotierenden faserigen Vorform mit einem sich entwickelnden Profil im radialen Schnitt ausgehend von einer faserigen Struktur (210), erhalten durch dreidimensionales oder mehrschichtiges Weben einer Vielzahl von Schichten aus Kettfäden (211), die durch Schussfäden (212) miteinander verbunden sind, wobei die faserige Textur (210) durch Wickeln unter Spannung auf einer Rotationsform (600) geformt wird, wobei die faserige Textur von einem Lagerkern (300) abgerollt wird, wobei die faserige Textur über eine oder mehrere Nachlaufrollen (400, 500) zirkuliert, die zwischen dem Lagerkern (300) und der Rotationsform (600) platziert sind, wobei mindestens eine Nachlaufrolle (400) im Schnitt gemäß einer Ebene, die durch eine axiale Richtung und eine radiale Richtung definiert ist, ein Profil aufweist, das mindestens eine erste Schräge (410) aufweist, die einen Winkel (β₄₁₀) mit der Achse (X₄₀₀) der Nachlaufrolle bildet, und einen zu der ersten Schräge benachbarten Abschnitt, wobei der Abschnitt parallel zur Achse (X₄₀₀) der Nachlaufrolle (400) ist oder einer zweiten Schräge (420) entspricht, die einen zweiten Winkel (β₄₂₀) mit der Achse der Nachlaufrolle bildet, der sich vom ersten Winkel unterscheidet,
wobei das Verfahren ferner die Verwendung mindestens einer Gegenrolle (20) umfasst, die eine zu der ersten Schräge (410) und zu dem der ersten Schräge benachbarten Abschnitt komplementäre Form aufweist, wobei jede Gegenrolle in einem von der ersten Schräge (410) und dem der ersten Schräge benachbarten Abschnitt vorher festgelegten Abstand gehalten wird, wobei der vorher festgelegte Abstand kleiner oder gleich der Dicke der faserigen Textur (210) ist, oder jede Gegenrolle einen Kontaktdruck auf die faserige Textur (210) im Bereich der ersten Schräge (410) und des zu der ersten Schräge benachbarten Abschnitts ausübt,
**dadurch gekennzeichnet, dass** die faserige Textur (220) mindestens eine Dickenvariation (223) in Richtung ihrer Breite aufweist und dass die Gegenrolle (40) auf ihrer Oberfläche mindestens ein Relief (411) aufweist, das zum Zusammenwirken mit der mindestens einen Dickenvariation bestimmt ist.

4. Verfahren nach Anspruch 3, wobei jede Gegenrolle (20) eine raue Oberfläche aufweist.

## Claims

1. An installation (10) forming an axisymmetric fiber preform presenting a profile that varies in radial section, the installation comprising a storage mandrel (300) for storing a fiber texture (210) in the form of a wound strip, one or more follower rollers (400, 500), and an axisymmetric mold (600) onto which the fiber texture is to be shaped by winding, at least one follower roller presenting, in section on a plane defined by an axial direction and by a radial direction, a profile including at least a first slope (410) forming an angle (β₄₁₀) with the axis (X₄₀₀) of the follower roller, and a portion adjacent to the first slope, said portion being parallel to the shaft (X₄₀₀) of the follower roller (400) or corresponding to a second slope (420) forming a second angle (β₄₂₀) with the axis of the follower roller that is different from the first angle; and
the installation further comprising at least one backing roller (20) of shape complementary to the first slope and the adjacent portion of said first slope, the installation including holder means (24, 25) for each backing roller configured to hold said backing roller at a predetermined distance from the first slope (410) and the portion adjacent to said first slope or configured to apply contact pressure from the backing roller (20) against the first slope (410) and the portion adjacent to said first slope;
the installation being **characterized in that** at least one backing roller (40) presents on its surface at least one portion in relief (411) corresponding to a change in section of the backing roller adapted to follow at least one change in thickness of the fiber preform.

2. An installation according to claim 1, wherein each backing roller (20) has a rough surface.

3. A method of shaping an axisymmetric fiber preform presenting a varying profile in radial section from a fiber structure (210) obtained by three-dimensional or multilayer weaving between a plurality of layers of warp yarns (211) interlinked by weft yarns (212), the fiber texture (210) being shaped by being wound under tension onto an axisymmetric mold (600), the fiber texture being unwound from a storage mandrel (300), the fiber texture traveling over one or more follower rollers (400, 500) placed between the storage mandrel (300) and the axisymmetric mold (600), at least one follower roller (400) presenting, in section in a plane defined by an axial direction and a radial direction, a profile including at least a first slope (410) forming an angle (β₄₁₀) with the axis (X₄₀₀) of the follower roller and a portion adjacent to the first slope, said portion being parallel to the axis (X₄₀₀) of the follower roller (400) or corresponding to a second slope (420) forming a second angle (3₄₂₀) with the axis of the follower roller that is different from the first angle; and
the method further comprising using at least one backing roller (20) presenting a shape complementary to the first slope (410) and the portion adjacent to said first slope, each backing roller being held at a predetermined distance from the first slope (410) and from the portion adjacent to said first slope, the predetermined distance being less than or equal to the thickness of the fiber texture (210), or each backing roller applying contact pressure against the fiber texture (210) on the first slope (410) and the portion adjacent to said first slope;
the method being **characterized in that** the fiber texture (220) presents at least one change (223) in thickness in its width direction and **in that** the backing roller (40) presents on its surface at least one portion in relief (411) for co-operating with said at least one change in thickness.

4. A method according to claim 3, wherein each backing roller (20) has a rough surface.
